# EUROPEAN PATENT SPECIFICATION

(11) **EP 0 490 294 B1**
(45) Date of publication and mention of the grant of the patent: **05.06.1996**
(21) Application number: 91120982.3
(22) Date of filing: 06.12.1991
(51) Int. Cl.: C03B 7/10

(54) **Device for cutting beads of extrusion material, such as molten glass, for the feeder of a manufacturing machine**
Vorrichtung zum Schneiden von Tropfen von Extrusionsmaterial, wie geschmolzenem Glas, für den Speiser einer Fertigungsmaschine
Dispositif pour couper des gouttes de matériau d'extrusion, comme de verre fondu, pour le distributeur d'une machine de fabrication

(30) Priority: 11.12.1990 IT 6799190
(43) Date of publication of application: 17.06.1992
(73) Proprietor: BOTTERO S.p.A., I-12100 Cuneo (IT)
(72) Inventor: Simondi, Carlo, I-12100 Cuneo (IT); Giraudo, Vittore, I-12100 Cuneo (IT); Basso, Giampiero, I-12081 Beinette (IT)
(74) Representative: Cerbaro, Elena

(56) References cited:
- EP-A- 0 164 902
- EP-A- 0 202 809
- US-A- 4 444 079

## Description

The present invention relates to a device for cutting beads of extrusion material, such as molten glass, for the feeder of a manufacturing machine, of the type defined in the preamble of claim 1. Various types of devices are known for cutting extrusion material, such as beads of molten glass fed on to a glass forming machine. The drawback of traditional scissor type cutters, for example of the type described on US-A-4 444 079, is that they stress the bead as it is being cut, thus resulting in distortion due to the bead drawing away from the fulcrum of the cutter. Moreover, as the feeder usually produces two or more parallel beads, a scissor type cutter does not enable the beads to be cut simultaneously.

Devices are also known featuring parallel-operating cutters, for cutting the beads simultaneously with no lateral displacement. One such device, on which the cutters are operated by a connecting rod and crank mechanism, presents numerous drawbacks, due to the considerable amount of slack involved, which increases with usage, and the high degree of inertia to which the device is subject, and which results in severe wear and even irreparable damage.

Another known device, on which parallel operation of one or both of the cutters is controlled by a pneumatic cylinder, provides for a poor degree of repeatability, due to the position sensors on the device for controlling the compressed air solenoids. Moreover, this type of device is difficult to time accurately with the other components on the feeder.

A further drawback common to both the above control devices is that the operating stroke of the cutter is constant, i.e. cannot be adjusted for readily compensating for wear on the cutter.

Finally, EP-A-0 202 809 describes a device on which parallel operation of both cutters is controlled by a drive unit which comprises, for each cutter, a rack connected to the relative cutter itself, and a common pinion. The pinion is disposed between the racks, is meshed to the racks theirself, and is connected to a shaft of an electrical servo motor to rotate in opposite directions and to move the racks, and then the cutters, in opposite parallel directions.

The drive unit above described presents a few drawbacks all due to the backlash, which is inevitable and increases in use. Then, the drive unit is no able to provide for synchronised and mutually operation of the cutters.

It is an object of the present invention to provide a highly straightforward, linear cutting device designed to overcome the aforementioned drawbacks.

According to the present invention, there is provided a cutting device as defined in claim 1.

Two preferred, non-limiting embodiments of the present invention will be described by way of example with reference to the accompanying drawings, in which:
Fig.1 shows a partially sectioned, schematic view of a forming system featuring a device for cutting beads of molten glass in accordance with the present invention;
Fig.2 shows a side view of a first embodiment of the cutting device according to the present invention;
Fig.3 shows a view of the device along line III-III in Fig.2;
Fig.4 shows a larger-scale top view of the Fig.2 device in the idle position;
Fig.5 shows the Fig.4 view in the operating position;
Fig.6 shows a larger-scale, partial horizontal section of Fig.5;
Fig.7 shows a diametrical section of a screw-nut screw pair with planet rollers on the device according to the present invention;
Fig.8 shows a side view of a further embodiment of the device according to the present invention;
Fig.9 shows a larger-scale top view of the Fig.8 device in the operating position;
Fig.10 shows a larger-scale, partial horizontal section of Fig.9;
Fig.11 shows a larger-scale, part view of the device in the direction of arrow A in Fig.9;
Fig.12 shows a larger-scale section along line XII-XII in Fig.9;
Fig.13 shows a larger-scale section along line XIII-XIII in Fig.9;
Fig.14 shows a larger-scale section along line XIV-XIV in Fig.9.

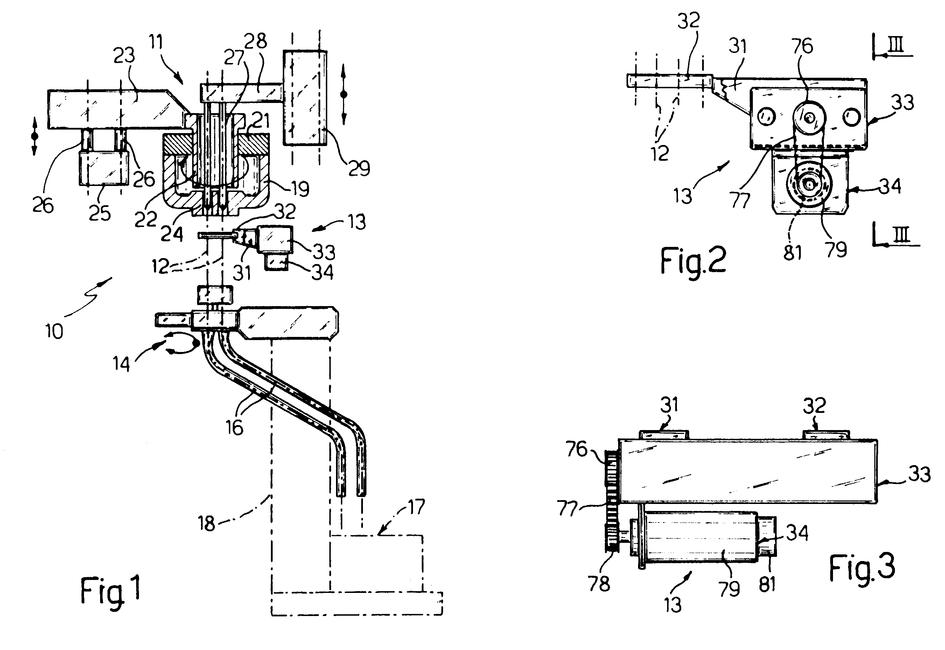

Number 10 in Fig.1 indicates a glass forming system comprising a furnace (not shown) communicating with a feeder 11 for supplying a number of beads 12 of molten glass. Fig.1 shows two beads 12, which may, however, be of any number, e.g. four.

Beads 12 are cut periodically by a device 13 into a corresponding number of molten glass portions, which, by means of a distributor 14 and a number of conduits 16, are fed sequentially to the forming station 17 of a forming machine 18 having a number of stations for producing glass items, such as bottles.

Feeder 11 comprises a tank 19 into which the molten glass from the furnace is fed, and which is closed at the top by a plate 21. This presents a circular opening in which slides and rotates a tube 22 rotated continually by a known mechanism 23 for maintaining a viscous condition of the glass.

The bottom of tank 19 presents a number of feed holes 24 through which beads 12 are formed. Tube 22 can be moved vertically for varying the supply of molten glass through holes 24, for which purpose a regulating device 25 is provided, which, by means of two columns 26, provides for vertically moving mechanism 23 together with tube 22.

Each hole 24 is controlled by a respective plunger consisting of a piston 27. The various pistons 27 are supported on a structure 28 integral with a punch 29 moved up and down by an electronic device (not shown) for opening and closing holes 24.

Cutting device 13 substantially comprises two linear cutting members 31 and 32 (Fig.s 2 and 8), i.e. operating parallel to themselves, which are operated synchronously in opposite directions by a common mechanism 33 controlled by servo means 34.

Each cutting member 31, 32 comprises a bar 36 (Fig.s 4 and 9) fitted with a number of knives 37, each with a V-shaped cutting edge. Bars 36 are parallel to each other and supported in projecting manner on respective symmetrical supports 38 and 39.

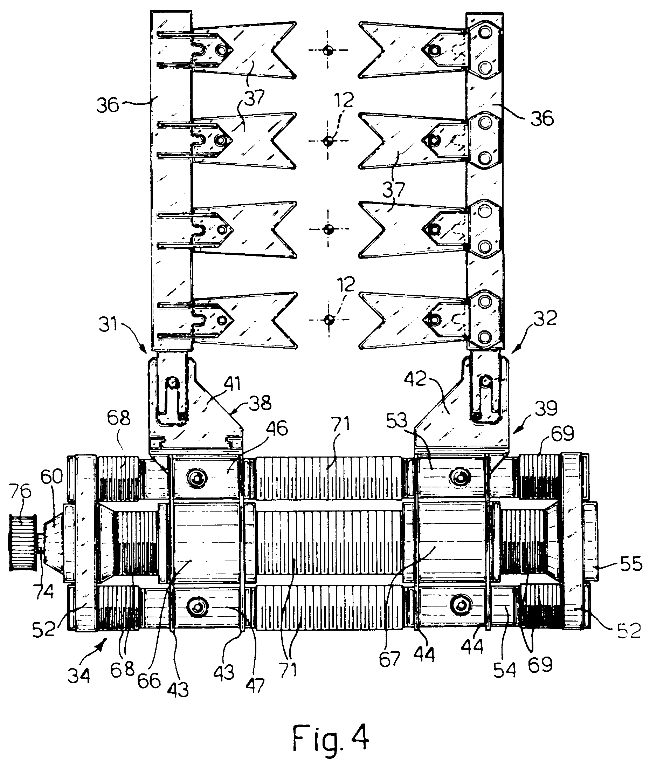

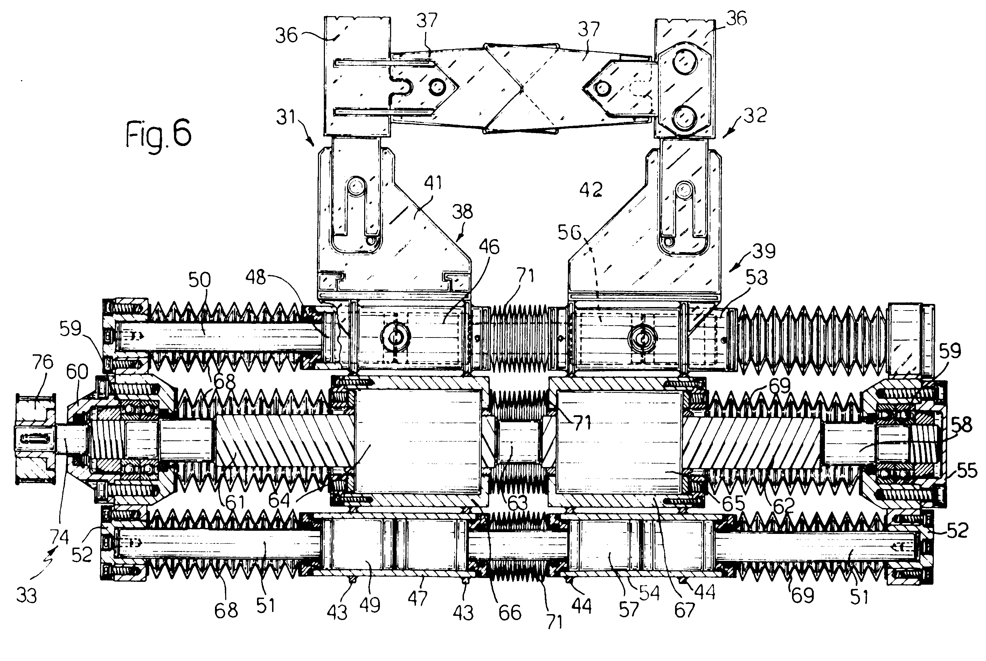

According to a first embodiment of the present invention, each support 38, 39 (Fig.4) consists of a bracket 41, 42 fitted, e.g. welded, to respective pairs of plates 43, 44. Plates 43 each present two openings in which are welded two sleeves 46 and 47 supporting respective linear bearings 48 and 49 (Fig.6) sliding on a pair of cylindrical guide bars 50 and 51 secured to two fixed sides 52. Sides 52 and guides 50 and 51 form the fixed frame of cutting device 13.

Plates 44 also present two openings in which are welded two sleeves 53 and 54 supporting respective linear bearings 56 and 57 also sliding on guide bars 50 and 51, which are thus common to both supports 38 and 39.

Operating mechanism 33 consists of a screw-nut screw assembly comprising a screw 58 turning on two rolling bearings 59 supported on sides 52. The seat of bearing 59 on one of sides 52 is closed by a flange 55, while the seat of the other bearing 59 is closed by a flange 60 with seals for sealing an extension 74 of screw 58.

Screw 58 presents two oppositely-threaded portions 61 and 62 separated by an unthreaded portion 63. Portions 61 and 62 are engaged by respective nut screws 64 and 65 fitted to respective sleeves 66 and 67 and therefore prevented from rotating in relation to the same.

Sleeve 66 is welded to the edges of a central opening in plates 43, and sleeve 67 to the edges of a central opening in plates 44. Screw 58 and guide bars 50 and 51 each present three bellows type covers 68, 69 and 71, fitted respectively between each sleeve 46, 47, 66 and respective side 52; between each sleeve 53, 54, 67 and respective side 52; and between each pair of sleeves 46-53, 47-54 and 66-67.

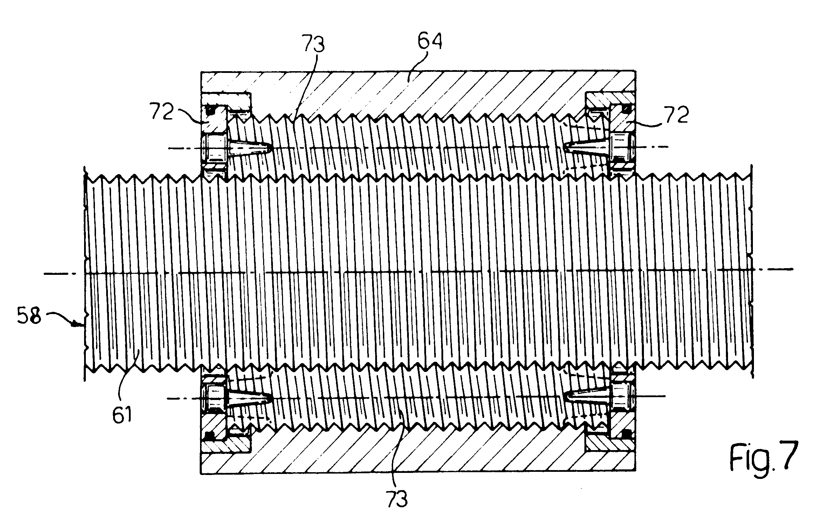

Nut screws 64 and 65 are known types with planet rollers, one of which, 64, is shown in Fig.7. The nut screw is closed by two rings 72 fitted in rotary manner with a number of threaded planet rollers 73 engaging both respective portion 61, 62 of screw 58, and the thread of respective nut screw 64, 65. Each nut screw 64, 65 thus provides for moving heavy loads, even at high linear speed, over long periods of operation.

Finally (Fig.6), extension 74 of screw 58 is fitted with a toothed pulley 76 driven by a toothed belt 77 (Fig.s 2 and 3) engaging a toothed drive pulley 78 fitted to the shaft of a reversible electric motor 79. Clockwise or anticlockwise operation of motor 79 provides for bringing together or parting cutting members 31, 32 respectively.

Motor 79 is connected to a position transducer 81, and, by means of position and/or speed feedback, can be controlled by the aforementioned electronic control system to operate to a high degree of precision and perfectly in time with pistons 27 (Fig.1).

The cutting device described above operates as follows.

When pistons 27 of feeder 11 are raised in relation to the Fig.1 position, molten glass is fed through holes 24 to produce a corresponding number of beads 12, which are fed between knives 37. When beads 12 reach a given length, punch 29 lowers pistons 27 to close holes 24 and so cut off downward supply of beads 12.

In time with the closure of holes 24, cutting device 13 is activated for cutting beads 12 into portions of given length. In particular, electric motor 79 is activated clockwise, so as to rotate pulley 76 and screw 58 clockwise via pulley 78 and toothed belt 77.

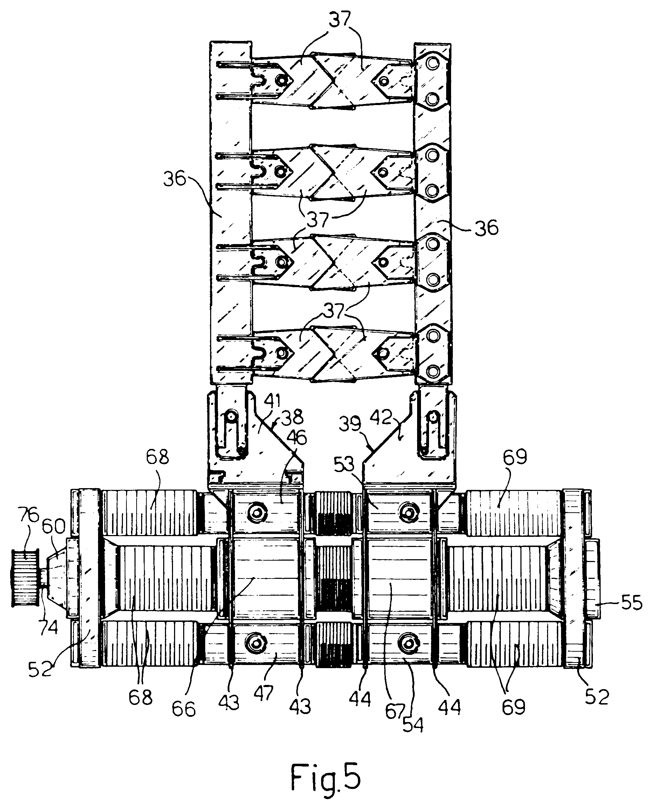

As a result, screw 58 moves nut screws 64 and 65 towards the center together with supports 38 and 39; and bars 36 and respective knives 37 move into the Fig.5 and 6 position, so as to cut beads 12 into respective portions for supply to distributor 14 (Fig.1).

Motor 79 is stopped by the electronic control system on the basis of the position fed back by transducer 81, after which, it is operated anticlockwise, and screw 58 parts nut screws 64 and 65 to set supports 38 and 39 to the idle position shown in Fig.4.

For adjusting the opening or closing stroke of supports 38 and 39, e.g. following wear or replacement of knives 37, this can be done by simply setting the new stroke in known manner on the electronic control system.

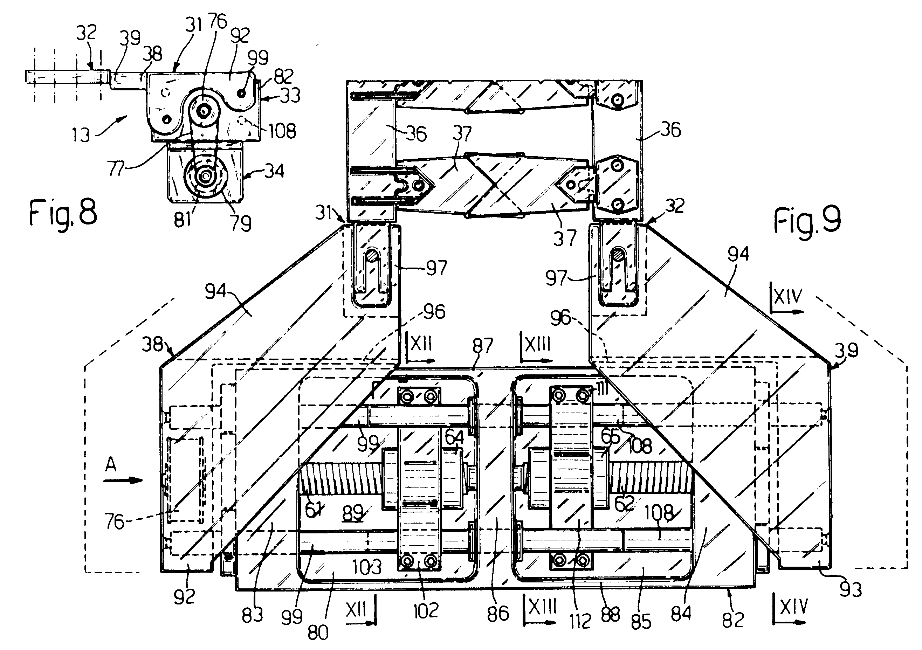

According to a further embodiment of the present invention, operating mechanism 33 (Fig.8) is located inside and supports 38 and 39 (Fig.9) substantially outside a closed housing 82, thus enabling the elimination of covers 68, 69 and 71 in Fig.6. In Fig.s 9-14, the parts similar to those of Fig.s 4-6 are indicated using the same numbering system.

Housing 82 (Fig.9) comprises two side walls 83, 84 and a middle wall 86 connected together by two longitudinal walls 87, 88 and an end wall 89, so as to produce two compartments 80, 85, which may be closed by a cover (not shown).

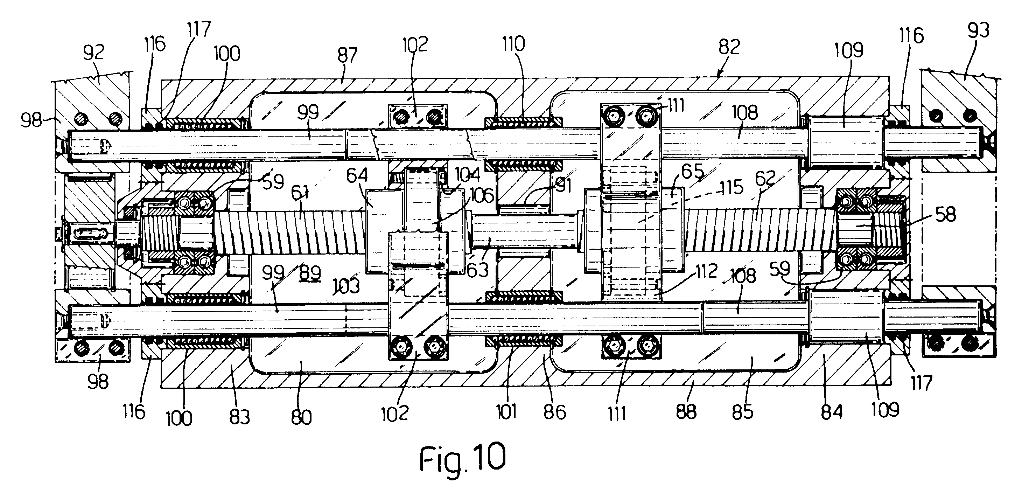

Side walls 83 and 84 each present a rolling bearing 59 (Fig.10) on which rotates screw 58 with opposite threaded portions 61, 62 cooperating with respective nut screws 64, 65, e.g. the planet roller type shown in Fig.7. Middle wall 86 presents a hole 91 corresponding with the unthreaded portion 63 of screw 58.

Each support 38, 39 (Fig.9) comprises a strong vertical lateral plate 92, 93 located to the side of side wall 83, 84 and fitted with a horizontal bracket 94 over housing 82. Bracket 94 is also supported on a longitudinal plate 96 outside wall 87 and integral with plate 92, 93. Brackets 94 are symmetrical and polygonal, and each present a portion 97 for assembling respective bars 36 of knives 37.

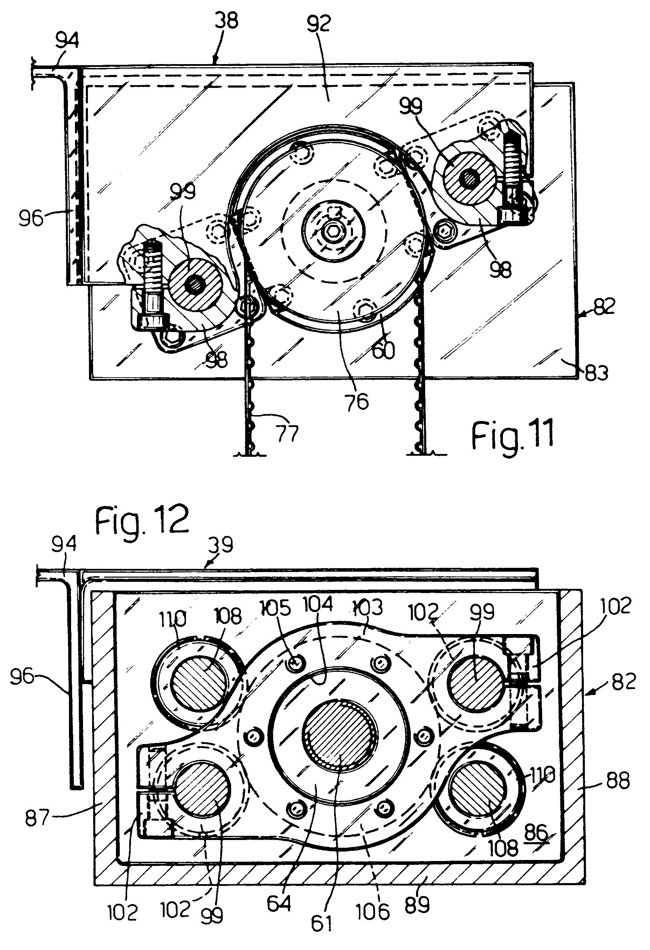

Plate 92 (Fig.8) is substantially L-shaped, and is fitted on the ends with two jaw type appendixes 98 (Fig.11) in turn fitted with two cylindrical bars 99 sliding axially on corresponding linear bearings 100 (Fig.10) on side wall 83, and on a further two linear bearings 101 on middle wall 86.

Between bearings 100 and 101, bars 99 are also fitted to two jaw type ends 102 (Fig.12) of a further plate 103 housed in compartment 80 of housing 82. Plate 103 presents a round central opening 104 in which a flange 106 of nut screw 64 is fitted by means of screws 105.

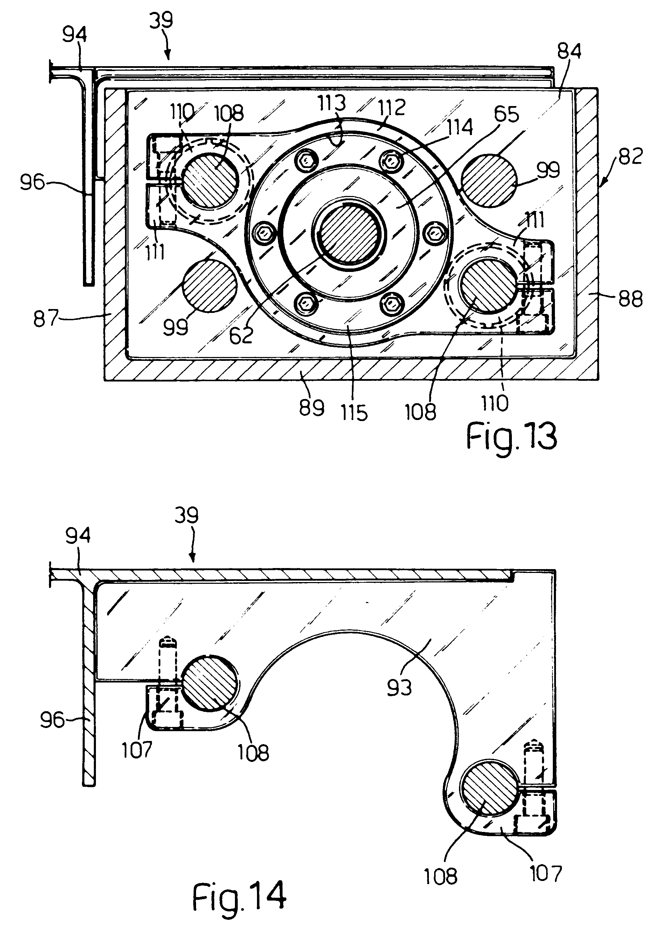

Similarly, plate 93 (Fig.14) is L-shaped, and is fitted with two jaw type appendixes 107 in turn fitted with two cylindrical bars 108 sliding axially on corresponding linear bearings 109 (Fig.10) on side wall 84, and on a further two linear bearings 110 on middle wall 86.

Between bearings 109 and 110, bars 108 are also fitted to two jaw type ends 111 (Fig.13) of a further plate 112 housed in compartment 85 of housing 82. Plate 112 presents a round central opening 113 in which a flange 115 of nut screw 65 is fitted by means of screws 114.

The shorter arm of L-shaped plates 92, 93 (Fig.s 11-14) is located on the opposite side in relation to screw 58, so that bars 99 and bearings 100 and 101 (Fig.s 8, 12) are situated in two opposite corners of middle wall 86, while bars 108 and bearings 109 and 110 are situated in the other two corners of middle wall 86.

The seat of each bearing 100 (Fig.10) on side wall 83 and each bearing 109 on side wall 84 is closed by a respective flange 116 having seals 117 on respective bar 99. The seats of bearings 59 of screw 58 on side walls 83 and 84 are closed by sealing flange 60 and flange 55 respectively, while extension 74 of screw 58 is fitted with toothed pulley 76 as in the previous embodiment.

The device shown in Fig.s 9-13 operates in the same way as the previous embodiment. That is, when operated in one direction, motor 79 (Fig.8) moves supports 38, 39 from the position shown by the dotted line to that shown by the continuous line in Fig.9, and vice versa if the direction of motor 79 is inverted.

Support 38 therefore slides with the two bars 99 on bearings 100 on side wall 83 (Fig.10) and on bearings 101 on middle wall 86, while plate 103 and consequently also nut screw 64 remain inside compartment 80. Support 39 in turn slides with the two bars 108 on bearings 109 on side wall 84 and on bearings 110 on middle wall 86, while plate 112 and consequently also nut screw 65 remain inside compartment 85.

The advantages of the cutting device according to the present invention will be clear from the foregoing description. In particular, the screw-nut screw pair 58, 64-65 provides for transmitting motion to supports 38, 39 in slackfree manner, while control of the rotation of screw 58 by servomotor 34 provides for troublefree adjustment of the amount of travel of supports 38, 39, and for timing said travel easily and extremely accurately with the other components of system 10 (Fig.1), in particular pistons 27 of feeder 11.

To those skilled in the art it will be clear that changes may be made to the cutting device as described and illustrated herein without, however, departing from the scope of the present invention. For example, servomotor 34 may consist of a step motor controlled by a step counter instead of position transducer 81; nut screws 64, 65 described herein may be replaced, for example, by normal or recirculating ball types; in place of belt 77, the shaft of motor 79 may be connected directly to screw 58 by means of a face coupling or precision gears, which is particularly advantageous in the case of the Fig.2-6 embodiment; and finally, the parts in housing 82 in the Fig.8-14 embodiment may be oil bath lubricated.

## Claims

1. A cutting device for cutting extrusion material, such as beads of molten glass (12) for the feeder (11) of a manufacturing machine, said device comprising a pair of mutually-operating linear cutting members (31, 32); means (33) for operating said two members (31, 32) parallel to themselves and in opposite directions; and servo means (34) for so controlling said operating means (33) as to enable the stroke of said members (31, 32) to be readily controlled and timed in relation to said feeder (11), said servo means comprise a motor (34) and a position transducer (81); said operating means comprising an operating mechanism (33) colon to both said members (31, 32), characterised by the fact that said common operating mechanism (33) comprises a screw-nut assembly, and provides for mutually symmetrical and synchronised operation of said cutting members (31, 32).

2. A device as claimed in Claim 1, characterised by the fact that said mechanism (33) comprises an actuating screw (58) having two oppositely-threaded portions (61, 62) activating respective nut screws (64, 65) integral with said two members (31, 32).

3. A device as claimed in Claim 2, characterised by the fact that each said nut screw (64, 65) presents planet rollers (73) enabling rapid displacement of even heavy loads.

4. A device as claimed in Claim 2 or 3, characterised by the fact that the shaft of said motor (79) is connected to said screw (58) via a face coupling or toothed transmission means (76-78).

5. A device as claimed in one of the foregoing Claims from 2 to 4, characterised by the fact that each of said two members (31, 32) comprises a rigid structure (38, 39) supporting a respective said nut screw (64, 65); said structures (38, 39) sliding on a feed frame (50-52; 82).

6. A device as claimed in Claim 5, characterised by the fact that said frame comprises a closed housing (82); each said structure (38, 39) comprising straight guide means (99, 108) sliding on linear bearings (100, 101; 109, 110) on said housing (82).

7. A device as claimed in Claim 6, characterised by the fact that said housing (82) is parallelepiped, and comprises two side walls (83, 84) and a middle wall (86) forming two compartments (80, 85); said screw (58) turning on said side walls (83, 84); and each said compartment (80, 85) housing the nut screw (64, 65) of one said structure (38, 39).

8. A device as claimed in Claim 7, characterised by the fact that said guide means comprise at least a bar (99, 108) connecting said nut screw (64, 65) to said structure (38, 39); said linear bearings (100, 101; 109, 110) being supported on a respective side wall (83, 84) of said housing (82) and on said middle wall (86).

9. A device as claimed in Claim 8, characterised by the fact that said guide means comprise two cylindrical bars (99, 108) connected between said structure (38, 39) and a plate (106, 112) supporting said nut screw (64, 65) and also housed in a respective said compartment (80, 85); each said bar (99, 108) sliding on a respective pair of said linear bearings (100, 101; 109, 110).

10. A device as claimed in Claim 9, characterised by the fact that one said pair of bars (99, 108) is situated in two opposite corners of said middle wall (86), the other said pair (99, 108) being situated in the other two corners of said middle wall (86).

11. A device as claimed in one of the foregoing Claims from 6 to 10, characterised by the fact that each said structure comprises a vertical plate (92, 93) parallel to one of said side walls (83, 84) and having a horizontal bracket (94) supporting a number of knives (37) with V-shaped cutting edges.

12. A device as claimed in Claim 5, characterised by the fact that said frame (50-52) comprises two sides (52) connected by a pair of straight parallel bars (50, 51); said screw (58) turning on said sides (52); and each said rigid structure (38, 39) having a pair of linear bearings (48, 49; 56, 57) by which it is guided by said pair of bars (50, 51).

13. A device as claimed in Claim 12, characterised by the fact that said operating mechanism (33) presents a number of bellows type covers (68, 69, 71) for said screw (58) and said bars (50, 51); one set (71) of said covers being located between said supports (38, 39), and another two sets (68, 69) being located between each said support (38, 39) and each said side (52).

## Patentansprüche

1. Schneidevorrichtung zum Schneiden von Extrusionsmaterial, wie beispielsweise Tropfen aus geschmolzenem Glas (12) für den Speiser (11) einer Fertigungsmaschine, mit einem Paar von sich im Wechsel betrieb bewegenden linearen Schneideelementen (31, 32) und mit Mitteln (33), um diese Mittel (31, 32) in entgegengesetzte Richtungen parallel zueinander anzutreiben , und mit einem Stellmittel (34), um die Antriebsmittel (33) so zu steuern, daß der Hub der Elemente (31, 32) einfach einstellbar und bezüglich dem Speiser (11) zeitlich abstimmbar ist, wobei das Stellmittel einen Motor (34) und einen Ortsmeßwandler (81) aufweist und die Antriebsmittel über einen beiden Elementen (31, 32) gemeinsamen Antriebsmechanismus (33) verfügen, **dadurch gekennzeichnet**, daß der gemeinsame Antriebsmechanismus (33) eine Schrauben-Mutter-Baueinheit aufweist und einen wechselnden, symmetrischen und synchronisierten Betrieb der Schneideelemente (31, 32) gewährleistet.

2. Vorrichtung nach Anspruch 1, dadurch gekennzeichnet, daß der Mechanismus (33) eine Antriebsschraube (58) mit zwei gegenläufigen Gewindeabschnitten (61, 62) aufweist, die zugehörige Schraubenmuttern (64, 65) antreiben, die mit den beiden Elementen (31, 32) ein Ganzes bilden.

3. Vorrichtung nach Anspruch 2, dadurch gekennzeichnet, daß die Schraubenmuttern (64, 65) Planetenrollen (73) aufweisen, die sogar bei schweren Lasten eine rasche Bewegung gestatten.

4. Vorrichtung nach Anspruch 2 oder 3, dadurch gekennzeichnet, daß die Welle des Motors (79) mit der Schraube (58) über eine Stirnflächenkupplung oder ein mit Zähnen versehenes Antriebsmittel (76-78) verbunden ist.

5. Vorrichtung nach einem der vorstehenden Ansprüche 2 bis 4, dadurch gekennzeichnet, daß beide Elemente (31, 32) eine starre Struktur (38, 39) aufweisen, die eine jeweilige Schraubenmutter (64, 65) halten, wobei die Struktur (38, 39) auf einem festen Rahmen (50-52; 82) gleitet.

6. Vorrichtung nach Anspruch 5, dadurch gekennzeichnet, daß der Rahmen ein geschlossenes Gehäuse (82) aufweist, wobei jede Struktur (38, 39) gerade Führungsmittel (99, 108) aufweist, die auf linearen Lagern (100, 101; 109, 110) in dem Gehäuse (82) gleiten.

7. Vorrichtung nach Anspruch 6, dadurch gekennzeichnet, daß das Gehäuse (82) ein Parallelepiped ist und zwei Seitenwände (83, 84) und eine Mittenwand (86) aufweist, die zwei Abteilungen (80, 85) bildet, wobei die Schraube (58) sich in den Seitenwänden (83, 84) dreht und jede Abteilung (80, 85) die Schraubenmutter (64, 65) von einer der Strukturen (38, 39) aufnimmt.

8. Vorrichtung nach Anspruch 7, dadurch gekennzeichnet, daß das Führungsmittel wenigstens einen Stab (99, 108) aufweist, der die Schraubenmutter (64, 65) mit der Struktur (38, 39) verbindet, wobei die linearen Lager (100, 101; 109, 110) in den jeweiligen Seitenwänden (83, 84) des Gehäuses (82) und der Mittenwand (86) gehalten sind.

9. Vorrichtung nach Anspruch 8, dadurch gekennzeichnet, daß das Führungsmittel zwei zylindrische Stäbe (99, 108) aufweist, die die Struktur (38, 39) mit einer Platte (106, 112) verbinden, die die Schraubenmutter (64, 65) hält und ebenfalls in einer jeweiligen Abteilung (80, 85) untergebracht ist, wobei jeder Stab (99, 108) auf einem jeweiligen Paar von linearen Lagern (100, 101; 109, 110) gleitet.

10. Vorrichtung nach Anspruch 9, dadurch gekennzeichnet, daß ein Paar von Stäben (99, 108) in zwei entgegengesetzten Ecken der Mittenwand (86) angeordnet ist, wobei das andere Paar (99, 108) in den anderen beiden Ecken der Mittenwand (86) angeordnet ist.

11. Vorrichtung nach einem der vorstehenden Ansprüche 6 bis 10, dadurch gekennzeichnet, daß jede Struktur über eine vertikale Platte (92, 93), die parallel zu einem der Seitenwände (83, 84) verläuft, und über einen horizontalen Träger (94) verfügt, der eine Anzahl von Messern (37) mit V-förmigen Schneidekanten hält.

12. Vorrichtung nach Anspruch 5, dadurch gekennzeichnet, daß der Rahmen (50-52) zwei Seitenteile (52) aufweist, die durch ein Paar von geraden Parallelstäben (50, 51) verbunden sind, wobei sich die Schraube (58) in den Seitenteilen (52) dreht und die feste Struktur (38, 39) über ein Paar von linearen Lagern (48, 49; 56, 57) verfügt, über die sie auf dem Paar von Stäben (50, 51) geführt ist.

13. Vorrichtung nach Anspruch 12, dadurch gekennzeichnet, daß der Antriebsmechanismus (33) eine Anzahl von balgartigen Abdeckungen (68, 69, 71) für die Schraube (58) und die Stäbe (50, 51) aufweist, wobei ein Satz (71) der Abdeckungen zwischen den Halterungen (38, 39) angeordnet ist und zwei weitere Sätze (68, 69) zwischen jeder Halterung (38, 39) und jedem Seitenteil (52) angeordnet sind.

## Revendications

1. Dispositif pour couper un matériau d'extrusion, par exemple des gouttes de verre fondu (12) pour le distributeur (11) d'une machine de fabrication, ledit dispositif comprenant une paire d'organes de coupe linéaires à fonctionnement réciproque (31, 32); un moyen (33) pour actionner lesdits deux organes (31, 32) parallèlement et dans des directions opposées; et des servomécanismes (34) pour commander ledit moyen d'actionnement (33) afin de permettre à la course desdits organes (31, 32) d'être facilement contrôlée et synchronisée relativement audit distributeur (11), lesdits servomécanismes comprenant un moteur (34) et un transducteur de position (81); ledit moyen d'actionnement (33) comprenant un mécanisme d'actionnement commun aux deux organes (31, 32), caractérisé en ce que ledit mécanisme d'actionnement commun (33) comprend un ensemble d'écrou à vis, et permet le fonctionnement réciproque, symétrique et synchronisé, desdits organes de coupe (31, 32).

2. Dispositif selon la revendication 1, caractérisé en ce que ledit mécanisme (33) comprend une vis d'actionnement (58) comportant deux portions à pas de vis opposés (61, 62) actionnant des écrous respectifs (64, 65) d'un seul tenant avec lesdits deux organes (31, 32).

3. Dispositif selon la revendication 2, caractérisé en ce que chaque écrou (64, 65) présente des rouleaux épicycloïdaux (73) permettant un déplacement rapide, même de lourdes charges.

4. Dispositif selon la revendication 2 ou 3, caractérisé en ce que l'arbre dudit moteur (79) est relié à ladite vis (58) via un couplage de face ou des moyens de transmission à dents (76-78).

5. Dispositif selon l'une quelconque des revendications précédentes 2 à 4, caractérisé en ce que chacun desdits deux organes (31, 32) comprend une structure rigide (38, 39) supportant un desdits écrous respectifs (64, 65); lesdites structures (38, 39) glissant sur un châssis fixe (50-52; 82).

6. Dispositif selon la revendication 5, caractérisé en ce que ledit châssis comprend un boîtier fermé (82); chacune desdites structures (38, 39) comprenant des moyens de guidage droits (99, 108) glissant sur des paliers linéaires (100, 101; 109, 110) sur ledit boîtier (82).

7. Dispositif selon la revendication 6, caractérisé en ce que ledit boîtier (82) est un parallélépipède, et comprend deux parois latérales (83, 84) et une paroi centrale (86) formant deux compartiments (80, 85); ladite vis (58) tournant sur lesdites deux parois latérales (83, 84); et chacun desdits compartiments (80, 85) logeant l'écrou (64, 65) de ladite structure (38, 39).

8. Dispositif selon la revendication 7, caractérisé en ce que lesdits moyens de guidage comprennent au moins une barre (99, 108) reliant ledit écrou (64, 65) à ladite structure (38, 39); lesdits paliers linéaires (100, 101; 109, 110) étant supportés sur une paroi latérale respective (83, 84) dudit boîtier (82) et sur ladite paroi centrale (86).

9. Dispositif selon la revendication 8, caractérisé en ce que lesdits moyens de guidage comprennent deux barres cylindriques (99, 108) reliées entre ladite structure (38, 39) et une plaque (106, 112) supportant ledit écrou (64, 65) et également logée dans un desdits compartiments respectifs (80, 85); chacune desdites barres (99, 108) glissant sur une paire respective desdits paliers linéaires (100, 101; 109, 110).

10. Dispositif selon la revendication 9, caractérisé en ce que l'une desdites paires de barres (99, 108) est située dans deux coins opposés de ladite paroi centrale (86), l'autre paire (99, 108) étant située dans les deux autres coins de ladite paroi centrale (86).

11. Dispositif selon l'une quelconque des revendications précédentes 6 à 10, caractérisé en ce que chacune desdites structures comprend une plaque verticale (92, 93) parallèle à l'une desdites parois latérales (83, 84) et comportant une console horizontale (94) supportant un certain nombre de couteaux (37) à bords de coupe en forme de V.

12. Dispositif selon la revendication 5, caractérisé en ce que ledit châssis (50-52) comprend deux côtés (52) reliés par une paire de barres parallèles droites (50, 51); ladite vis (58) tournant sur lesdits côtés (52); et chacune desdites structures rigides (38, 39) comportant une paire de paliers linéaires (48, 49; 56, 57) par lesquels elle est guidée par ladite paire de barres (50, 51).

13. Dispositif selon la revendication 12, caractérisé en ce que ledit mécanisme d'actionnement (33) présente un certain nombre de couvercles du type à soufflet (68, 69, 71) pour ladite vis (58) et lesdites barres (50, 51); un jeu (71) desdits couvercles étant situé entre lesdits supports (38, 39), et deux autres jeux (68, 69) étant situés entre chacun desdits supports (38, 39) et chacun desdits côtés (52).
